# FASCICULE DE BREVET EUROPEEN

(11) **EP 1 128 240 B1**
(45) Date de publication et mention de la délivrance du brevet: **15.07.2009**
(21) Numéro de dépôt: 00200795.3
(22) Date de dépôt: 07.03.2000
(51) Int. Cl.: G04G 9/00, G02F 1/1347, G02F 1/1335

(54) **Ensemble d'affichage à inversion de constrate comprenant deux dispositifs d'affichage superposés**
Eine zwei übereinander angeordnete Anzeigevorrichtungen umfassende Anzeigeeinheit mit Kontrastinversion
Display unit with inverted contrast comprising two superposed display devices

(30) Priorité: 22.02.2000 CH 3432000
(43) Date de publication de la demande: 29.08.2001
(73) Titulaire: ASULAB S.A., CH-2501 Bienne (CH)
(72) Inventeur: Naci, Basturk, 2073 Enges (CH)
(74) Mandataire: Rossand, Isabelle

(56) Documents cités:
- EP-A- 0 926 574
- EP-A- 0 930 522
- US-A- 4 104 627
- PATENT ABSTRACTS OF JAPAN vol. 006, no. 156 (P-135), 17 août 1982 (1982-08-17) & JP 57 074723 A (HITACHI LTD), 11 mai 1982 (1982-05-11)

## Description

La présente invention a pour objet un ensemble d'affichage comprenant deux dispositifs superposés, un premier affichage le plus éloigné de l'observateur étant surmonté d'un deuxième affichage formé par un assemblage de cellules à cristaux liquides et polariseurs comportant des moyens de commande pour rendre visible soit seulement l'information donnée par le deuxième affichage en offrant la possibilité d'inverser le contraste de tout ou partie de ladite information, soit l'information donnée par le premier affichage.

L'invention concerne également une pièce d'horlogerie pourvue d'un tel ensemble d'affichage dans lequel le premier affichage est constitué par exemple par le cadran de la pièce d'horlogerie et le deuxième affichage est disposé entre la glace et le cadran ou confondu avec la glace. L'invention concerne plus particulièrement une telle pièce d'horlogerie dans laquelle le cadran comporte un affichage analogique.

Selon un autre aspect de l'invention, l'information donnée par le premier affichage est visible en permanence et celle donnée par le deuxième affichage peut être appelé sur demande pour apparaître en clair sur fond foncé ou inversement en foncé sur fond clair.

Le brevet EP 0 930 522 divulgue un exemple d'ensemble d'affichage comportant deux cellules à cristaux liquides superposées comprenant sur le dessus un polariseur absorbant et sur le dessous un polariseur réflectif. Selon plusieurs variantes, il est prévu d'ajouter à cet ensemble, sur le dessus, un film de diffusion et/ou, sur le dessous, un réflecteur et/ou filtre coloré et/ou une source de lumière et/ou un réflecteur sélectif.

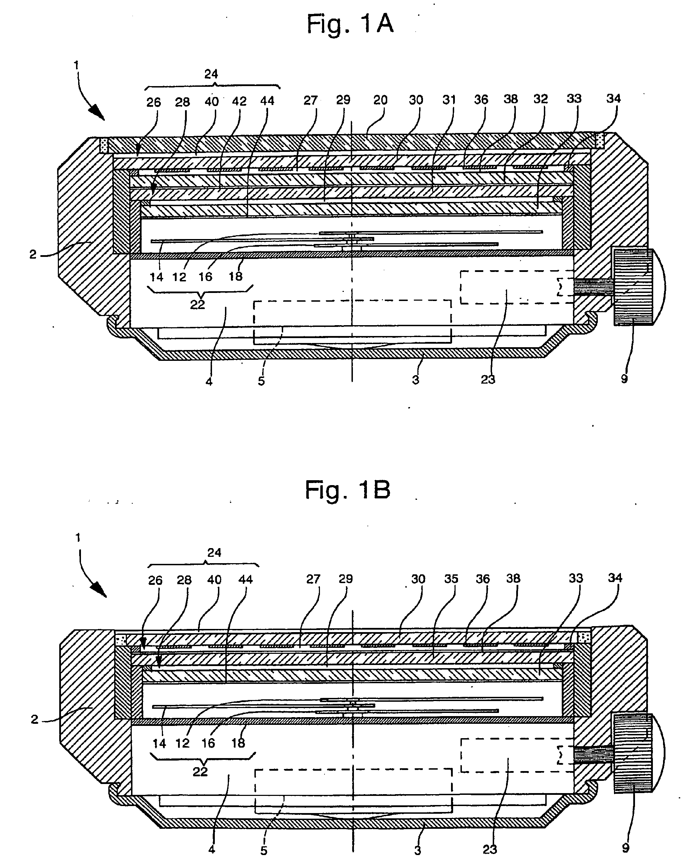

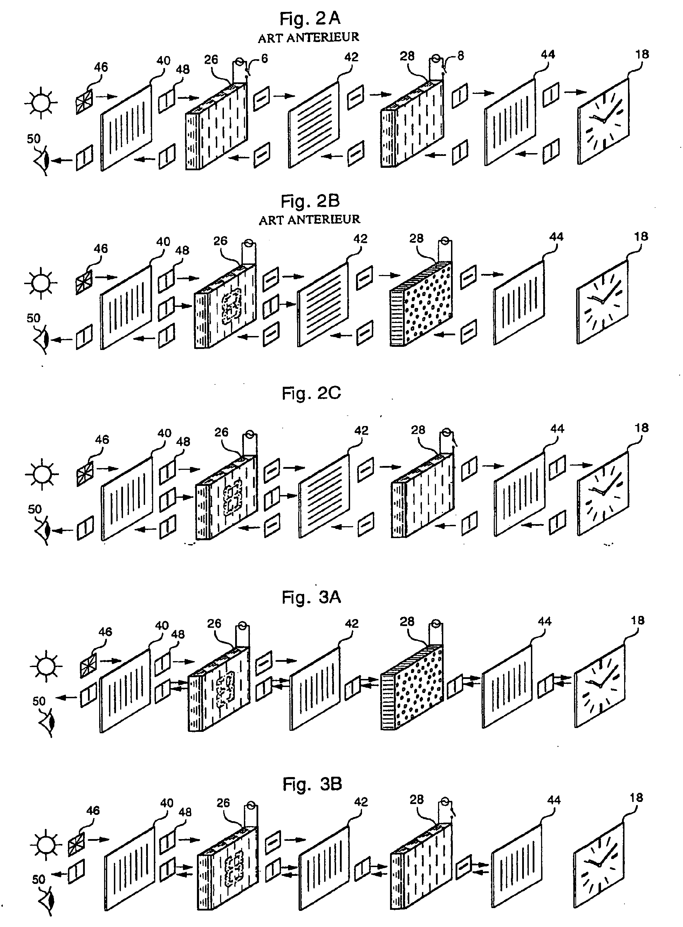

On connaît déjà par le brevet EP 0 926 574 au nom de la demanderesse un ensemble d'affichage comprenant deux dispositifs d'affichage superposés pouvant prendre deux états différents dans lesquels l'un des dispositifs d'affichage est visible à l'exclusion de l'autre. Un tel ensemble d'affichage dans l'application à une montre-bracelet est schématiquement représenté en coupe diamétrale à la figure 1, le principe de fonctionnement étant donné par les figures 2A et 2B.

La montre représentée à la figure 1A, désignée par la référence générale 1, comprend classiquement une carrure 2, un fond 3 et une glace 20 délimitant ensemble une boîte dans la partie inférieure de laquelle sont disposés un mouvement d'horlogerie électronique 4 alimenté par une pile 5. Le mouvement 4 comprend un circuit électronique garde-temps associé à un dispositif d'entraînement (non représenté), des aiguilles 12, 14 et 16, heures, minutes, secondes se déplaçant au-dessus d'un cadran 18 portant des index horaires (non représentés).

Les aiguilles 12, 14 et 16 et le cadran 18 constituent le premier dispositif d'affichage, de type analogique dans l'exemple illustré, désigné par la référence générale 22.

Cette montre-bracelet 1 comprend en outre un deuxième affichage de type digital, désigné par la référence générale 24 et disposé entre le cadran 18 et la glace 20. En se référant également aux figures 2A et 2B, on voit que le deuxième affichage 24 est composé d'une structure de type "sandwich" comprenant, en allant de la glace 20 au cadran 18, un polariseur linéaire absorbant 40, une cellule d'affichage à cristaux liquides 26, un polariseur linéaire absorbant 42 croisé avec le polariseur 40, une valve optique à cristaux liquides 28 et un polariseur réflectif 44 croisé avec le polariseur 42. Les états de commutation de la cellule et de la valve du deuxième affichage sont commandés par une unité de gestion 23 en fonction des manipulations effectuées au moyen d'au moins un organe de commande extérieur 9.

La cellule d'affichage 26 comprend de façon classique un substrat avant 30 transparent, un substrat arrière 32 également transparent et un cadre de scellement 34 formant des moyens d'espacement et de fermeture délimitant avec les substrats 30 et 32 une cavité fermée contenant des cristaux liquides 27. Les faces en regard des substrats 30 et 32 comprennent des électrodes transparentes respectivement 36 et 38 réalisées par exemple en ITO. Dans l'exemple illustré, l'électrode arrière 38 s'étend sur toute la surface du substrat 32 et l'électrode avant 36 est configurée en segments adressables séparément au moyen de l'unité de gestion 23, l'état activé (ON) ou non activé (OFF) étant symbolisé par le contacteur 6 sur le schéma de la figure 2A et dans les schémas suivants. Cette cellule 26 permet donc d'afficher des caractères alphanumériques en faisant passer les cristaux liquides 27 d'un état transparent à un état absorbant, ou inversement selon le type de cristaux liquides utilisés. Comme on le comprendra par la suite, dans l'application à une montre-bracelet où l'économie d'énergie a une grande importance, on préférera utiliser des cristaux liquides conférant à la cellule un état transparent lorsqu'aucune tension n'est appliquée et un état absorbant lorsqu'une tension est appliquée.

La valve optique 28, contenant des cristaux liquides 29 et ayant un contacteur 8, a une structure comparable à celle de la cellule 26 et n'en diffère qu'en ce que les deux électrodes transparentes recouvrent totalement les faces en regard du substrat supérieur 31 et du substrat inférieur 33, de sorte que la valve 28 peut passer d'un état totalement transparent à un état totalement absorbant, ou inversement selon le type de cristaux liquides utilisés. Pour la raison indiquée précédemment, on choisira de préférence des cristaux liquides 29 de façon à avoir un état transparent en l'absence de tension.

Le document EP 0 926 574 n'envisage que deux états de fonctionnement différents pour l'ensemble d'affichage, comme expliqué brièvement en référence aux figures 2A et 2B annexées à la présente demande de brevet. Les cristaux liquides 27 et 29 qui garnissent respectivement la cellule 26 et la valve 28 sont de type nématique à hélice à anisotropie positive.

Dans un premier état représenté à la figure 2A, dans lequel la cellule 26 et la valve 28 ne sont pas commutées (état OFF-OFF), la lumière naturelle 46 non polarisée est polarisée verticalement par le premier polariseur absorbant 40 et désignée par la référence générale 48. En traversant la cellule 26, l'axe de polarisation subit une rotation de 90°, de sorte que la lumière traverse sans modification le polariseur croisé 42. En traversant ensuite la valve 28, l'axe de polarisation subit une nouvelle rotation de 90° de sorte que la lumière polarisée traverse sans modification le polariseur réflectif 44 pour atteindre le cadran 18 constituant le premier dispositif d'affichage 22.

La lumière suit le même chemin lors de son trajet retour, de sorte que le cadran 18 est visible pour un observateur 50 placé à l'avant de l'ensemble d'affichage.

Dans un deuxième état représenté à la figure 2B, la cellule 26 est commutée (état ON), évidemment seulement au niveau des segments 36 sélectionnés par l'adressage, et la valve 28 est également commutée (état ON) sur toute sa surface de sorte que la lumière polarisée verticalement émergeant du polariseur absorbant 40 aura deux comportements différents. Dans la zone où la cellule 26 n'est pas commutée la lumière polarisée suit le même trajet que précédemment jusqu'à la valve 28 qu'elle traverse sans subir une nouvelle rotation de sorte que, son axe de polarisation étant perpendiculaire à celui du polariseur réflectif 44, elle est totalement réfléchie par trajet inverse en masquant le cadran 18 à l'observateur 50. Dans la zone de la cellule 26 où des segments 36 sont commutés, la lumière polarisée verticalement 48 traverse la cellule 26 sans modification, de sorte que son axe de polarisation étant perpendiculaire à celui du polariseur absorbant 42, elle est totalement absorbée, les segments commutés apparaissent alors en sombre sur fond clair.

Selon un deuxième mode de réalisation décrit dans le document EP 0 926 574, le même effet visuel est obtenu avec des cristaux liquides de type nématique à hélice à anisotropie négative avec une construction dans laquelle les trois polariseurs sont parallèles.

Comme on le voit, quelle que soit l'anisotropie positive ou négative des cristaux liquides de type nématique à hélice, le passage d'une configuration de commutation OFF-OFF à une configuration de commutation ON-ON ne permet pas d'obtenir une inversion de contraste. De façon connue, une telle inversion de contraste pourrait être obtenue au moyen d'un adressage inverse, mais au prix d'une demande en énergie environ neuf fois supérieure à celle qui est nécessaire pour commuter seulement 1/10 des segments utiles pour l'affichage, solution qui n'est pas satisfaisante dans un système où l'économie d'énergie a une grande importance.

De même, selon l'enseignement de l'art antérieur, on pourrait espérer obtenir une inversion de contraste par une rotation de 90° d'un polariseur, ce qui entraînerait évidemment une grande complication au niveau d'un entraînement mécanique ou manuel, surtout pour un ensemble d'affichage de petites dimensions, tel que celui pouvant être incorporé dans une montre bracelet.

Pour tenter d'obtenir une inversion de contraste, il semble également naturel, pour éviter les inconvénients évoqués ci-dessus, d'examiner l'effet obtenu avec le dispositif qui vient d'être décrit en utilisant une troisième possibilité de commutation, à savoir la cellule de l'état ON et la valve à l'état OFF, comme représenté à la figure 2C. En dehors des zones de commutation des segments de la cellule 26, la lumière polarisée traverse la valve 28 en subissant une nouvelle rotation de 90° de sorte qu'elle est polarisée parallèlement au polariseur réflectif 44 qu'elle traverse pour être renvoyée par le cadran par un trajet inverse identique jusqu'à l'observateur 50. Le deuxième affichage se détache donc en foncé sur fond de cadran, qui doit alors nécessairement être clair, mais ne subit aucune inversion de contraste.

Le deuxième mode de réalisation du document EP 0 926 574 suggère d'agir sur l'orientation relative des trois polariseurs. Les aspects qu'il serait possible d'observer avec des cristaux liquides TN à anisotropie positive, pour les deux configurations de commutation susceptibles de produire une inversion de contraste sont résumés dans le tableau ci-après en rappelant ceux observés aux figures 2B et 2C.

| Disposition Polariseurs | | | Etat | | Affichage(s) observable(s) & contraste 2ème affichage | Aspect selon fig. No |
|---|---|---|---|---|---|---|
| P40 | P42 | P44 | cellule C26 | valve V28 | | |
| P ⊥ | P ⊥ | P | ON | ON | 2ème F/C [P44] | 2B |
| | | | ON | OFF | 1 er et 2ème F/C, si cadran clair | 2C |
| P // | P // | P | ON | ON | 1 er et 2ème C/F, si cadran clair | 3A |
| | | | ON | OFF | 2ème C/F [P42] | 3B |
| P // | P ⊥ | P | ON | ON | 2ème C [P44] 1 F [P42] | 4A |
| | | | ON | OFF | 2ème C/F [P42], si cadran clair | 4B |
| P ⊥ | P // | P | ON | ON | 1 er et 2ème F/C, si cadran clair | 5A |
| | | | ON | OFF | 2ème F/C [P44] | 5B |

| | | | | | | |
|---|---|---|---|---|---|---|
| Légende : ⊥ polariseurs croisés; // polariseurs parallèles CIF clair sur fond foncé; FIC foncé sur fond clair | | | | | | |

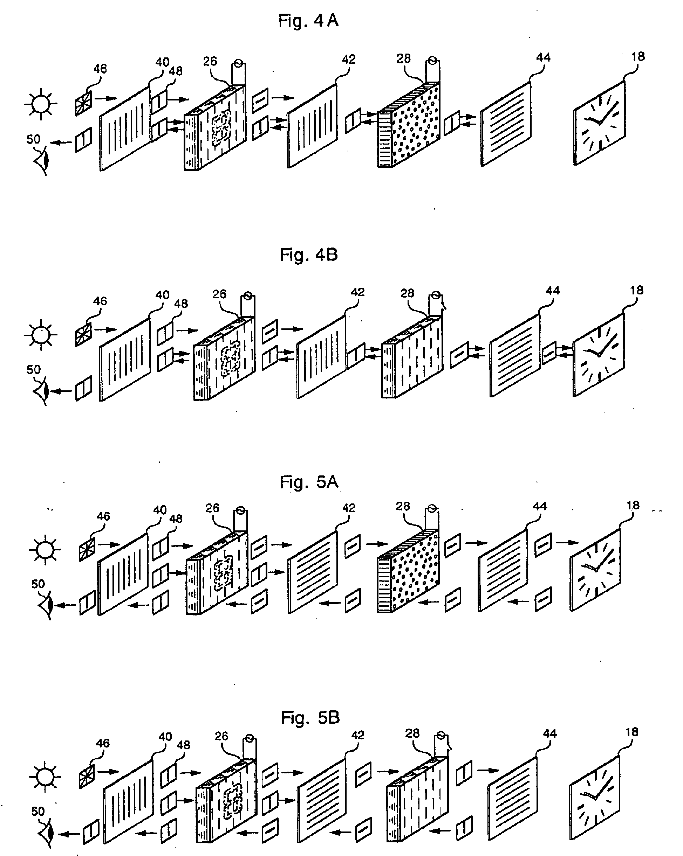

L'ensemble représenté aux figures 3A et 3B diffère de l'art antérieur précité en ce que le polariseur absorbant intermédiaire 42 a été tourné de 90° de sorte que les trois polariseurs ont des axes de polarisation parallèles. Cette configuration permet d'avoir, quel que soit l'état de commutation ON-ON ou ON-OFF un deuxième affichage en clair sur fond foncé, c'est-à-dire inversé par rapport à l'exemple précédent, mais sans inversion pour l'ensemble d'affichage en tant que tel lorsqu'on passe d'un état de commutation à l'autre. Dans l'ensemble représenté aux figures 4A et 4B, on a également fait subir une rotation de 90° au polariseur réflectif arrière 44 et on observe qu'on obtient le même effet visuel que précédent, simplement avec une inversion de la configuration de commutation. En faisant subir une rotation de 90° au polariseur intermédiaire 42, comme représenté aux figures 5A et 5B, on revient à l'aspect visuel des figures 2A et 2B, toujours sans obtenir une inversion de contraste sur le même ensemble d'affichage.

La présente invention a donc pour objet de pallier les inconvénients de cet art antérieur en procurant un ensemble d'affichage comprenant deux dispositifs d'affichage superposés permettant d'obtenir une inversion de contraste de l'un des affichages sans augmenter la demande en énergie et sans nécessiter un mécanisme complexe d'entraînement d'un polariseur.

A cet effet, l'invention concerne un ensemble d'affichage selon la revendication 1.

Lorsque la cellule n'est pas commutée (état OFF), l'ensemble d'affichage peut en outre présenter, en fonction de l'état de commutation (ON/OFF) de la valve optique, deux autres aspects différents. Selon un aspect, le deuxième affichage est invisible, et la cellule et la valve sont transparentes pour permettre à l'observateur de voir uniquement le premier affichage. Selon un autre aspect, les deux affichages sont rendus invisibles par un masque miroir ou un masque noir selon le caractère réflectif ou absorbant du polariseur arrière.

Selon un autre aspect de l'invention, la valve peut comprendre au moins deux zones distinctes à commutation (ON/OFF) inversée, de sorte que deux types d'information du deuxième affichage sont observables avec une inversion de contraste.

Selon encore un autre aspect de l'invention, en n'ayant pas de polariseur entre la cellule d'affichage et la valve optique, il est possible de construire le deuxième affichage avec un substrat transparent médian commun à la cellule d'affichage et à la valve optique, en réduisant par là-même l'effet indésirable de parallaxe.

L'ensemble d'affichage selon l'invention permet donc à un unique ensemble comprenant deux dispositifs d'affichages superposés de présenter jusqu'à cinq aspects différents par un simple jeu de commutations de la cellule d'affichage et de la valve optique.

L'invention présente en outre l'avantage de permettre à l'utilisateur de choisir le type de contraste convenant le mieux à l'éclairement du lieu où il se trouve, à savoir en foncé sur fond clair s'il y a peu de lumière, ou au contraire en clair sur fond foncé s'il y a beaucoup de lumière.

D'autres caractéristiques et avantages de la présente invention apparaîtront plus clairement à la lecture des modes de réalisation et de fonctionnement qui suivent, en référence aux dessins annexés dans lesquels :
- la figure 1A, déjà citée, est une vue en coupe d'une montre-bracelet comportant un ensemble d'affichage selon l'art antérieur,
- la figure 1 B est un mode de réalisation particulier d'un ensemble d'affichage selon l'invention, incorporé dans une montre-bracelet,
- les figures 2A et 2B, déjà citées, sont des représentations schématiques des deux modes de fonctionnement divulgués dans l'art antérieur,
- la figure 2C, déjà citée, est une représentation schématique d'un autre mode de fonctionnement envisageable avec l'ensemble d'affichage de l'art antérieur,
- les figures 3A, 3B, 4A, 4B, 5A et 5B, déjà citées, sont des représentations schématiques de modifications pouvant être apportées à l'ensemble d'affichage de l'art antérieur,
- les figures 6, 6A à 6E sont des représentations schématiques d'un premier mode de réalisation d'un ensemble d'affichage selon l'invention,
- les figures 7, 7A à 7E sont des représentations schématiques d'une variante du premier mode de réalisation,
- les figures 8, 8A à 8E sont des représentations schématiques d'un deuxième mode de réalisation d'un ensemble d'affichage selon l'invention,
- les figures 9, 9A à 9E sont des représentations schématiques d'une variante du deuxième mode de réalisation, et
- les figures 10, 10A à 10E sont des représentations schématiques d'un autre mode de mise en oeuvre de l'invention.

La description qui suit est faite à titre d'exemple dans le cadre d'une application de l'invention à une pièce d'horlogerie telle qu'une montre-bracelet du type de celle représentée à la figure 1. Il est bien entendu que l'invention n'est pas limitée à cette application et qu'elle pourra avantageusement être utilisée dans le cadre de toute autre application, tels que des instruments de mesure ou d'animation pour lesquels une inversion de contraste de tout ou partie des informations affichées peut être utile, esthétique ou surprenante.

La construction même des deux dispositifs d'affichage superposés à l'intérieur d'une montre-bracelet ne sera pas décrite plus avant, étant donné que, dans son mode de réalisation le plus général, elle correspond à ce qui a déjà été décrit en référence à la figure 1A, à l'exception du polariseur intermédiaire 42 qui a été supprimé.

Dans le cas d'une application à une montre-bracelet, le premier affichage affichera essentiellement des grandeurs temporelles et le deuxième affichage affichera des grandeurs temporelles complémentaires des précédentes ou des grandeurs non temporelles de systèmes capteurs ou de systèmes de traitements par exemple alphanumériques contenus dans la boîte de ladite pièce d'horlogerie.

Dans un mode de réalisation particulier représenté à la figure 1B, on voit que la glace 20 peut être supprimée, à condition bien sûr de donner une épaisseur suffisante au substrat transparent supérieur 30 de la cellule 26 du deuxième dispositif d'affichage 24. Etant donné que la construction selon l'invention ne nécessite plus de polariseur intermédiaire 42, le substrat transparent inférieur 32 de la cellule 26 et le substrat supérieur transparent 31 de la valve 28 peuvent ne former qu'un unique substrat transparent 35 comprenant sur ses faces externes des électrodes transparentes respectivement pour la cellule 26 et pour la valve 28. Un tel agencement présente comme avantages de réduire encore plus l'effet de parallaxe et d'augmenter la luminosité de l'ensemble étant donné qu'un polariseur, dans son rôle passif (c'est-à-dire lorsque l'axe de la lumière polarisée est parallèle à l'axe de polarisation du polariseur), entraîne normalement une perte de luminosité de 5 à 8 % à chaque passage de lumière polarisée.

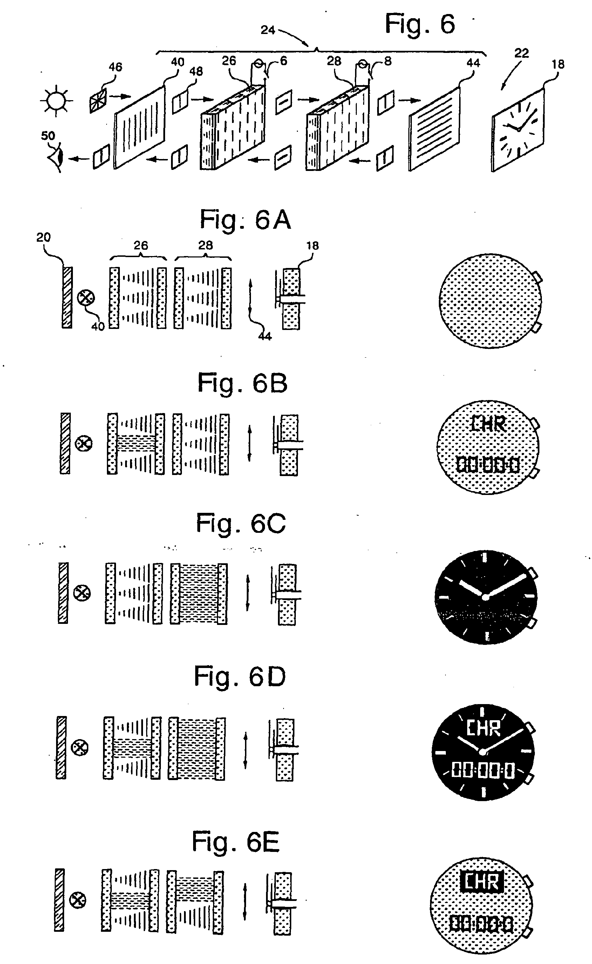

En se référant maintenant plus particulièrement aux figures 6, 6A à 6D, on a représenté un ensemble d'affichage selon l'invention comprenant un premier dispositif d'affichage 22 de type analogique ayant un cadran sombre 18 et un deuxième dispositif d'affichage 24, disposé entre le premier dispositif 22 et une glace 20 du côté d'un observateur 50. Ce deuxième dispositif 24 est formé par un empilement comprenant un polariseur avant absorbant 40 orienté vers la glace, une cellule d'affichage 26 à cristaux liquides de type nématique à hélice à anisotropie positive, dont les segments peuvent être commutés d'un état à un autre (ON/OFF) au moyen d'un commutateur 6, une valve optique 28 ayant les mêmes cristaux liquides que ceux de la cellule 26, ou un autre cristal liquide d'anisotrope diélectrique positive pouvant être commutée d'un état à un autre (ON/OFF) au moyen du commutateur 8 et d'un polariseur réflectif 44 croisé avec la polariseur 40.

Dans la figure 6A, qui représente à gauche une coupe transversale de l'ensemble représenté à la figure 6, et à droite l'aspect de l'ensemble d'affichage visible par l'observateur 50, la cellule 26 et la valve 28 ne sont pas commutées, configuration de commutation OFF-OFF qui sera désignée par la suite par la lettre A. La lumière polarisée 48 subit une première rotation de 90° à travers la cellule 26 et une deuxième rotation de 90° à travers la valve 28 de sorte que son axe de polarisation est perpendiculaire à celui du polariseur réflectif 44 : la lumière est alors réfléchie en suivant un trajet inverse identique et le premier affichage 22 est caché par un masque miroir formé par le polariseur 44 de sorte qu'aucune information n'est affichée.

A la figure 6B, la cellule 26 est commutée (ON) et la valve 28 n'est pas commutée (OFF), cette configuration étant désignée par la suite par la lettre B. Dans les zones ne comportant pas de segments 36 commutés, la lumière suit le même trajet que précédemment et on obtient un fond miroir. Dans les zones où les segments sont commutés, représentés sur la figure par la zone centrale, la lumière polarisée 48 traverse la cellule 26 sans modification, subit une rotation de 90° en traversant la valve 28, de sorte que son axe de polarisation étant parallèle à celui du polariseur réflectif 44, elle le traverse sans modification pour être réfléchie par le cadran 18 et suivre un parcours inverse identique. L'observateur voit donc à travers ces fenêtres transparentes des portions du cadran sombre, de sorte que l'information délivré par la cellule 26 se détache en sombre sur fond clair avec un effet miroir.

A la figure 6C, la cellule 26 n'est pas commutée (OFF) et la valve 28 est commutée (ON), configuration qui sera désignée par la suite par la lettre C. Toute la lumière polarisée 48 traverse la cellule 26 en subissant une rotation de 90°, puis traverse la valve 28 sans modification, de sorte qu'en ayant son axe de polarisation parallèle à celui du polariseur réflectif, elle le traverse pour frapper le cadran et être réfléchie par un trajet inverse identique au trajet aller : l'observateur voit donc uniquement le premier affichage porté par le cadran 18.

A la figure 6D, les segments de la cellule 26 et la valve 28 sont commutés (ON-ON), configuration de commutation qui sera désignée par la suite par la lettre D. Les rayons lumineux polarisés qui traversent l'ensemble dans des zones n'ayant pas de segments commutés permettent de voir des portions du cadran, comme représentés à la figure 6C, c'est-à-dire procurent un fond foncé. Au contraire dans les zones où les segments sont commutés, la lumière polarisée 48 traverse la cellule 26 et la valve 28 sans modification, et arrive sur le polariseur réflectif avec une direction de polarisation perpendiculaire à celle dudit polariseur, de sorte qu'elle est réfléchie en suivant un trajet inverse faisant apparaître l'information délivrée par le deuxième affichage en clair sur fond foncé. Comme on le voit en passant de la configuration de commutation B à la configuration de commutation D, on obtient une inversion de contraste de l'information affichée du foncé vers le clair.

La figure 6E montre une configuration de commutation, désignée par la suite par la lettre E, dans laquelle la cellule 26 est commutée (ON) et la valve comporte une surface supérieure rectangulaire commutée (ON), faisant apparaître dans cette zone une partie de l'information en clair sur fond foncé, et le reste de la surface à l'état non commuté (OFF) faisait apparaître l'autre partie de information en foncé sur fond clair. Cette configuration de commutation qui permet à un même instant d'avoir une inversion de contraste permet par exemple de différencier deux variétés d'informations complémentaires ou de natures différentes.

Comme on le voit, les différents aspects de l'ensemble d'affichage selon l'invention, et notamment les inversions de contraste, sont obtenus très simplement par des configurations de commutations résultant des positions des commutateurs 6, 8, eux-mêmes commandés par l'unité de gestion 23 répondant aux manipulations effectuées au niveau d'au moins un bouton de commande extérieur 9, étant précisé que le constructeur est libre de choisir seulement certaines configurations de commutation.

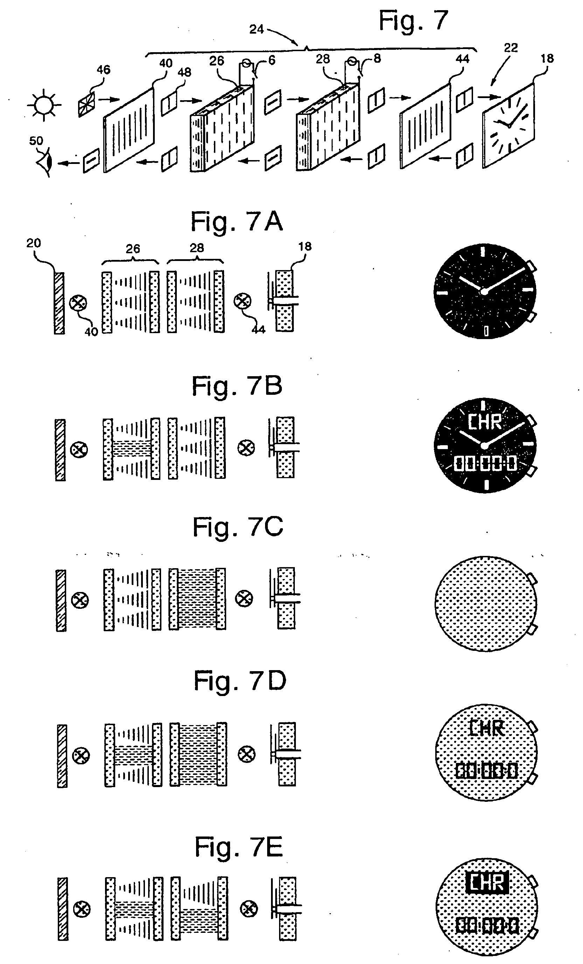

Dans la variante représentée aux figures 7, 7A à 7E, la construction diffère de la précédente en ce que les deux polariseurs 40 et 44 sont parallèles, ce qui a pour effet, par rapport aux figures 6, 6A à 6D, de permuter les configurations de commutation, d'une part entre le masque miroir et le premier affichage seul, d'autre part entre les deux états d'inversion de contraste. Dans la configuration A, le premier affichage est visible en permanence, sans aucun apport d'énergie, alors que le masquage par un masque miroir est obtenu avec la configuration C. Dans la configuration B, le deuxième affichage apparaît en clair sur fond foncé, alors que le contraste inverse est obtenu avec la configuration D. On observera que l'aspect de l'ensemble d'affichage avec la configuration E est naturellement inchangé.

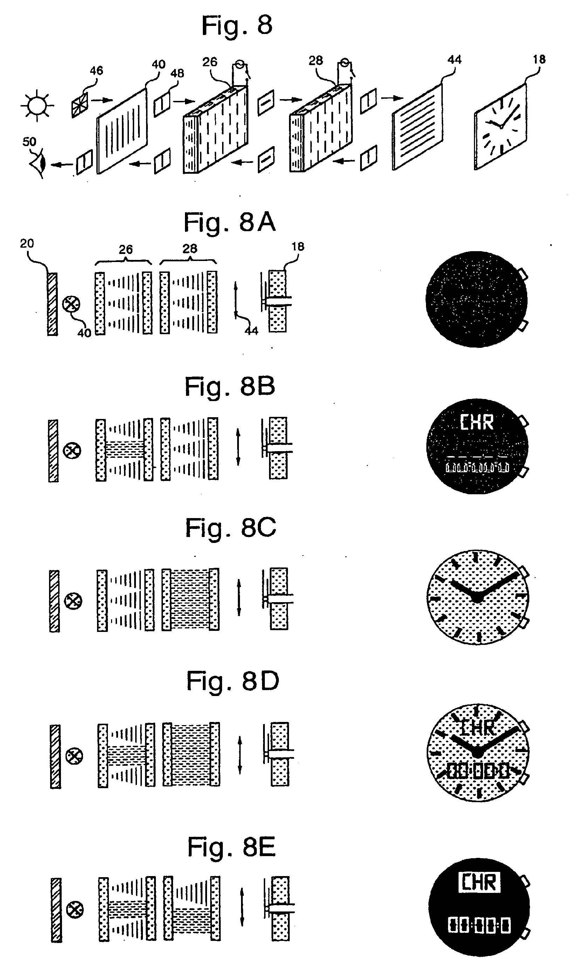

En se référant maintenant au mode de réalisation représenté aux figures 8, 8A à 8E, on voit que la construction proposée relève du même principe que précédemment, mais en diffère en ce que le cadran 18 du premier affichage est clair et le polariseur arrière 44 est un polariseur linéaire absorbant, croisé avec le polariseur avant 40 dans cette variante d'exécution. Dans la configuration de commutation A (OFF-OFF) représentée aux figures 8 et 8A, la lumière polarisée 48 subit une rotation de 90° en traversant la cellule 26, puis une deuxième rotation de 90° en traversant la valve 28 de sorte qu'elle frappe le polariseur 44 en ayant son axe de polarisation perpendiculaire à celui du polariseur absorbant 44 : elle est donc totalement absorbée en masquant le premier affichage avec un masque noir. En suivant le trajet des rayons lumineux comme cela a été expliqué dans les exemples précédents, on voit que la configuration B permet d'avoir uniquement le deuxième affichage en clair sur fond foncé, la configuration C d'avoir uniquement le premier affichage, la configuration D d'avoir le premier affichage dans un contraste inversé par rapport à celui obtenu avec la configuration B, et la configuration E d'avoir simultanément avec un contraste inversé deux parties de l'information délivrée par le deuxième affichage.

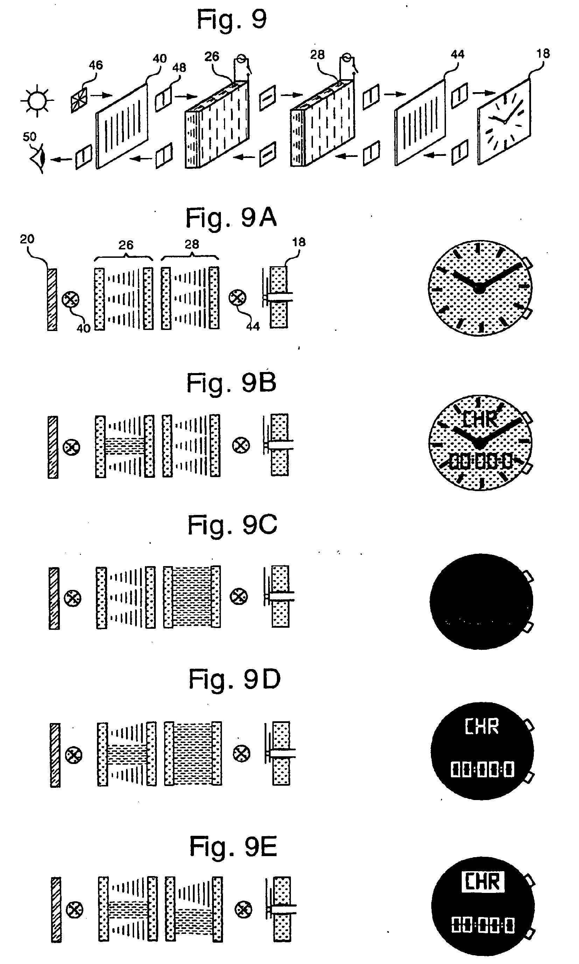

Dans la variante représentée aux figures 9, 9A à 9E, la construction diffère de celle qui vient d'être décrite en référence aux figures 8, 8A à 8D, en ce que le polariseur arrière 44 est parallèle au polariseur avant, en produisant le même effet que celui expliqué pour la variante décrite à la figure 7 par rapport à la figure 6. Ainsi, dans la configuration A, l'observateur 50 voit seulement le premier affichage, dans la configuration B, il voit le deuxième affichage en foncé sur fond clair, dans la configuration C, il voit seulement un masque noir, dans la configuration D, il voit seulement le deuxième affichage en clair sur fond foncé, c'est-à-dire avec un contraste inversé par rapport à celui observé avec la configuration B, et dans la configuration E, il voit deux parties de l'information délivrée par le deuxième affichage avec des contrastes inversés.

Dans les exemples qui viennent d'être décrits en référence aux figures 6 à 6E, les cristaux liquides 27, 29 remplissant la cellule 26 et la valve 28 étaient tous deux à anisotropie positive. Si maintenant on remplit la cellule 26 et la valve 28 avec des cristaux liquides à anisotropie négative avec un alignement homéotrope avec une rotation potentielle de 90°, on obtiendra exactement le même aspect visuel avec exactement les mêmes configurations de commutation. Si on a la même construction qu'à la figure 6, dans un état de commutation A (OFF-OFF), on voit que la lumière polarisée verticalement 48 traverse sans modification la cellule 26 et la valve 28 pour frapper le polariseur réflectif 44 perpendiculairement à son axe de polarisation et qu'elle est réfléchie en suivant un trajet inverse identique : l'observateur voit alors un fond miroir comme c'était le cas représenté à la figure 6A. Il en sera de même avec les autres configurations de commutation qui permettront d'obtenir l'inversion de contraste observé entre les figures 6B et 6D, ainsi qu'avec les autres constructions correspondant aux figures 7 à 9.

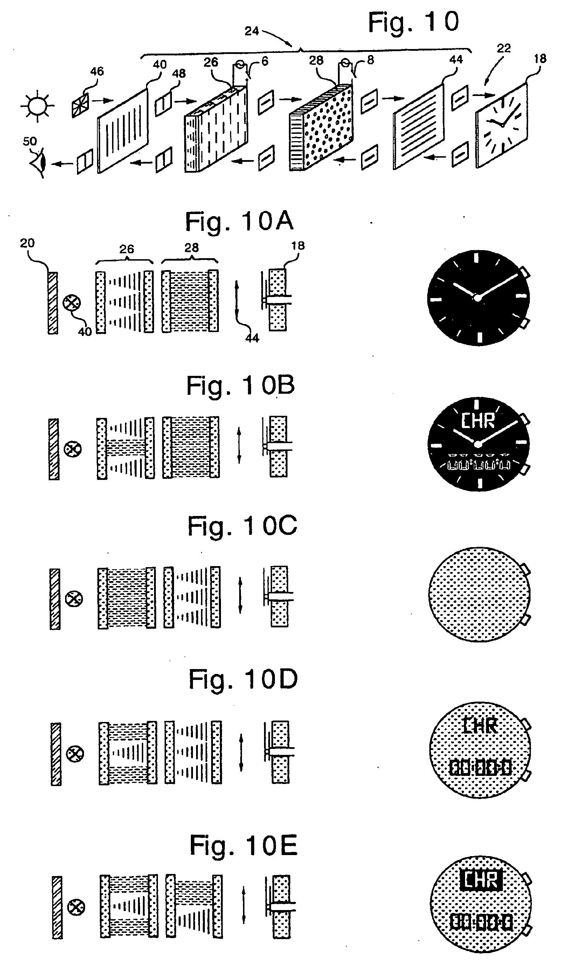

En se référant maintenant aux figures 10 et 10A à 10E, on a représenté un ensemble d'affichage selon l'invention dont la construction est la même que celle de la figure 6, mais en ayant rempli la cellule 26 avec des cristaux liquides 27 de type nématique à hélice à anisotropie négative et la valve 28 avec des cristaux liquides 29 de type nématique à hélice à anisotropie positive. Dans la configuration de commutation A (OFF-OFF) on voit à la figure 10A que la lumière polarisée 48 subit une rotation de 90° en traversant la cellule 26, n'a pas son orientation modifiée en traversant la valve 28, et en ayant son axe de polarisation parallèle à celui du polariseur réflectif 44, le traverse en étant réfléchi par le cadran pour suivre un trajet inverse identique. L'observateur 50 voit donc le premier affichage comme représenté à la figure 10A. En suivant de la même façon le trajet de la lumière polarisé, l'observateur 50 voit le deuxième affichage en clair sur fond sombre dans la configuration de commutation B (figure 10B), un fond miroir dans la configuration de commutation (figure 10C), le deuxième affichage avec un contraste inversé en sombre sur fond clair dans la configuration de commutation D (figure 10D) et un double inversion de contraste dans la configuration de commutation E (figure 10E).

On observe alors qu'avec les mêmes configurations de commutation, on obtient les mêmes aspects visuels que ceux observables aux figures 7A à 7E. Si on utilise maintenant, avec le même remplissage de cellule et valve que ci-dessus, la construction correspondant à la figure 7, il est facile de se rendre compte qu'on obtient au contraire, toujours avec des configurations de commutation identiques, l'aspect visuel représenté aux figures 6A à 6E. De même toujours avec le même remplissage, la construction de la figure 8 donnera les aspects visuels représentés aux figures 9A à 9E, et inversement la construction de la figure 9 donnera les aspects visuels représentés aux figures 8A à 8E. On fera enfin observer qu'en permutant l'ordre de remplissage des cristaux liquides dans la cellule, et la valve, les aspects qui viennent d'être décrits en référence aux figures 10 et suivantes sont inchangés.

Ainsi, quels que soient les modes de réalisation et les variantes d'exécution, ensemble d'affichage selon l'invention permet toujours d'obtenir une inversion de contraste de l'information délivrée par le deuxième affichage, en veillant simplement à associer un premier affichage à cadran foncé avec un deuxième affichage ayant un polariseur arrière réflectif, et inversement un premier affichage à cadran clair avec un deuxième affichage ayant un polariseur arrière absorbant. Il est bien évident que la notion "claire" ou "foncée" pour le cadran dépend du niveau de contraste qu'on souhaite obtenir.

Dans les exemples qui viennent d'être décrits, le premier dispositif d'affichage a été représenté, à titre d'exemple de type analogique. Sans sortie du cadre de l'invention, ledit premier dispositif d'affichage peut également être de type digital, de type mixte, analogique et digital, et comporter en outre au moins un élément décoratif. De même, sans sortir du cadre de la présente invention, la partie digitale du premier dispositif d'affichage peut avoir une structure comparable à celle du deuxième affichage, en augmentant ainsi le nombre d'effets pouvant être obtenus avec un unique ensemble d'affichage selon des configurations appropriées de l'état commuté ou non commuté de deux cellules et de deux valves.

Sans sortir du cadre de l'invention, il est possible de remplir la cellule 26 et la valve 28 avec des compositions actives sur la lumière polarisée différentes de la famille de cristaux liquides qui vient d'être décrites, en permettant par exemple soit d'obtenir pour le deuxième affichage un taux de multiplexage plus élevé, soit d'avoir une tension de commande différente pour la cellule 26 et pour la valve 28 pouvant entraîner une simplification du circuit de commande 23, soit encore de procurer un effet de mémoire. A titre illustratif et non limitatif, on peut utiliser pour la cellule 26 d'affichage des cristaux liquides de type nématique (TN) à hélice et pour la valve 28 des cristaux liquides de type IPS (In Plane Switching), ou de type CT (Cholesteric Texture) qui procure un effet de mémoire.

D'autres variantes sont encore envisageables pour l'homme de métier sans sortir du cadre de la présente invention tel que définie dans les revendications.

## Revendications

1. Ensemble d'affichage à deux dispositifs d'affichage (22, 24) superposés à inversion de contraste comprenant un premier dispositif d'affichage (22), un deuxième dispositif d'affichage (24) actif ayant une double structure formée, d'une part d'une cellule d'affichage matriciel ou à segments (26) à cristaux liquides (27) confinés dans un espace délimité par deux substrats transparents (30, 32) et ayant deux états (ON,OFF) de commutation, d'autre part, d'une valve optique (28) à cristaux liquides (29) confinés dans un espace délimité par deux substrats transparents (31, 33) et ayant au moins deux états (ON,OFF) de commutation, et des moyens de commande (23) permettant d'appliquer sélectivement une tension appropriée à la cellule (26) et/ou à tout ou partie de la valve (28) pour les faire passer d'un état à l'autre, **caractérisé en ce qu'**un premier polariseur (40) est disposé à l'avant de cellule d'affichage (26) et qu'un deuxième polariseur (44) est disposé à l'arrière de la valve (28) de sorte que, la cellule (26) étant commutée (ON) pour afficher au moins une information, la commutation totale ou partielle de la valve (28) d'un état à un autre inverse le contraste de l'information affichée par le deuxième dispositif d'affichage (2A) d'un aspect clair vers un aspect foncé ou inversement, en fonction de la nuance claire ou foncée du premier dispositif d'affichage (22), et du caractère absorbant ou réflectif du polariseur (44) placé à l'arrière du deuxième dispositif d'affichage (24).

2. Ensemble d'affichage selon la revendication 1, **caractérisé en ce que** la commutation de la valve (28) d'un état à un autre permet en outre soit de rendre visible seulement le premier affichage (22), soit de le cacher totalement par un masque miroir ou par un masque noir lorsque la cellule (26) n'est pas commutée (OFF).

3. Ensemble d'affichage selon la revendication 1, **caractérisé en ce que** la valve (28) comprend au moins deux zones distinctes à commutation (ON-OFF) inversée, de sorte que deux types d'informations du deuxième affichage (24) sont observables avec une inversion de contraste.

4. Ensemble d'affichage selon la revendication 1, **caractérisé en ce que** les cristaux liquides (27, 29) dudit ensemble d'affichage sont de type nématique à hélice indifféremment à anisotropie positive ou négative, en étant identiques ou différents dans la cellule (26) et dans la valve (28).

5. Ensemble d'affichage selon la revendication 4, **caractérisé en ce que** le premier affichage (22) a une nuance foncée, le polariseur avant (40) du deuxième affichage (24) est de type absorbant ou réflectif et le polariseur arrière (44) est de type réflectif en étant croisé avec le polariseur avant (40) ou parallèle à celui-ci.

6. Ensemble d'affichage selon la revendication 4, **caractérisé en ce que** le premier affichage (22) a une nuance claire, le polariseur avant (40) est de type absorbant ou réflectif et le polariseur arrière (44) est de type absorbant en étant croisé avec le polariseur avant (40) ou parallèle à celui-ci.

7. Ensemble d'affichage selon la revendication 1, **caractérisé en ce que** les substrats transparents (32, 31) en regard de la cellule (26) et de la valve (28) sont confondus en un unique substrat transparent (35).

8. Ensemble d'affichage selon l'une quelconque des revendications 1 à 7, **caractérisé en ce que** le premier dispositif d'affichage (22) est choisi parmi un dispositif analogique, un dispositif digital, une combinaison de ces deux dispositifs et un élément décoratif.

9. Ensemble d'affichage selon la revendication 7, **caractérisé en ce que** la partie digitale du premier dispositif d'affichage (22) a une structure comparable à celle du deuxième dispositif d'affichage (24).

10. Pièce d'horlogerie comprenant une boite fermée par une glace (20) et un fond (3) dans laquelle est logé un mouvement d'horlogerie (4) associé à au moins un dispositif d'affichage formé par un ensemble d'affichage (22) selon l'une quelconque des revendications 1 à 9, ledit premier dispositif d'affichage (24) affichant essentiellement des grandeurs temporelles et ledit deuxième dispositif d'affichage affichant des grandeurs temporelles complémentaires des précédentes ou des grandeurs non temporelles de systèmes capteurs ou de système de traitement par exemple alphanumériques contenus dans la boîte de ladite pièce d'horlogerie.

11. Pièce d'horlogerie selon la revendication 10, **caractérisée en ce que** ledit premier dispositif d'affichage (22) comprend un cadran (18) au-dessus duquel se déplacent une aiguille des heures (14), une aiguille des minutes (16) et une aiguille des secondes (12).

12. Pièce d'horlogerie selon les revendications 10 et 11, **caractérisée en ce que** le deuxième dispositif d'affichage (24) est confondu avec la glace (20).

## Claims

1. Display assembly with two superposed contrast inversion display devices (22, 24) including a first display device (22), a second active display device (24) having a double structure, one structure being formed by a liquid crystal dot matrix display cell or by a digit liquid crystal display cell (26), said liquid crystals (27) being confined in a space delimited by two transparent substrates (30, 32) and having two switching states (ON,OFF), and the other structure being formed by a liquid crystal optical valve (28), said liquid crystals (29) being confined in a space delimited by two transparent substrates (31, 33) and having at least two switching states (ON,OFF) and control means (23) allowing an appropriate voltage to be selectively applied to the cell (26) and/or to all or part of the valve (28) to cause them to switch from one state to another, **characterised in that** a first polariser (40) is arranged at the front of the display cell (26) and **in that** a second polariser (44) is arranged at the back of the valve (28) so that, when the cell (26) is switched (ON) to display at least one item of data, the total or partial switching of the valve (28), from one state to another, inverts the contrast of the data displayed by said second display device (24) from a light appearance to a dark appearance or vice versa, as a function of the light or dark shade of the first display device (22), and the absorbent or reflective nature of the polariser (44) placed at the back of the second display device (24).

2. Display assembly according to claim 1, **characterised in that** the switching of the valve (28) from one state to another also allows either the first display (22) only to be made visible, or it to be totally hidden by a mirror mask or by a black mask when the cell (26) is not switched (OFF).

3. Display assembly according to claim 1, **characterised in that** the valve (28) includes at least two distinct zones with opposite switching mode (ON,OFF), so that two types of data of the second display (24) can be observed with a contrast inversion.

4. Display assembly according to claim 1, **characterised in that** the liquid crystals (27, 29) of said display assembly are of the twisted nematic type with either positive or negative anisotropy, which may be identical or different in the cell (26) and in the valve (28).

5. Display device according to claim 4, **characterised in that** the first display device (22) has a dark shade, the front polariser (40) of the second display device (24) is of the absorbent or reflective type and the back polariser (44) is of the reflective type while being crossed with the front polariser (40) or parallel thereto.

6. Display assembly according to claim 4, **characterised in that** the first display device (22) has a light shade, the front polariser (40) is of the absorbent or reflective type and the back polariser (44) is of the absorbent type while being crossed with the front polariser (40) or parallel thereto.

7. Display device according to claim 1, **characterised in that** the transparent substrates (32, 31) opposite the cell (26) and the valve (28) are combined in a single transparent substrate (35).

8. Display assembly according to any of claims 1 to 7, **characterised in that** the first display device (22) is selected from among an analogue device, a digital device, a combination of these two devices and a decorative element.

9. Display device according to claim 7, **characterised in that** the digital part of the first display device (22) has a comparable structure to that of the second display device (24).

10. Timepiece including a case closed by a crystal (20) and a back cover (3) in which a clockwork movement (4) associated with at least one display device is housed, latter being formed by a display assembly (22) according to any of claims 1 to 9, said first display device (24) essentially displaying time related data and said second display device displaying time related data complementary to the preceding data or non time related data of sensor systems or, processing systems, for example alphanumerical, integrated in the case of said timepiece.

11. Timepiece according to claim 10, **characterised in that** said first display device (22) includes a dial (18) above which move an hour hand (14), a minute hand (16) and a second hand (12).

12. Timepiece according to claims 10 and 11, **characterised in that** the second display device (24) is combined with the crystal (20).

## Patentansprüche

1. Anzeigeanordnung mit zwei überlagerten Anzeigevorrichtungen (22, 24) mit Kontrastumkehr, mit einer ersten Anzeigevorrichtung (22), einer aktiven zweiten Anzeigevorrichtung (24), die eine Doppelstruktur besitzt, die einerseits aus einer matrixförmigen Anzeigezelle oder aus einer Anzeigezelle mit Segmenten (26) aus Flüssigkristallen (27), die in einen durch zwei lichtdurchlässige Substrate (30, 32) begrenzten Raum eingeschlossen sind und zwei Schaltzustände (ON, OFF) besitzen, und andererseits aus einem Lichtventil (28) mit Flüssigkristallen (29), die in einen durch zwei lichtdurchlässige Substrate (31, 33) begrenzten Raum eingeschlossen sind und wenigstens zwei Schaltzustände (ON, OFF) besitzen, gebildet ist, und Steuermitteln (23), die ermöglichen, wahlweise an die Zelle (26) und/oder an das gesamte Ventil (28) oder an einen Teil hiervon eine geeignete Spannung anzulegen, um sie zu einem Übergang von einem Zustand in den anderen zu veranlassen, **dadurch gekennzeichnet, dass** ein erster Polarisator (40) vor der Anzeigezelle (26) angeordnet ist und dass ein zweiter Polarisator (44) hinter dem Ventil (28) angeordnet ist, derart, dass dann, wenn die Zelle (26) umgeschaltet (ON) wird, um wenigstens eine Information anzuzeigen, die Gesamt-oder Teilumschaltung des Ventils (28) von einem Zustand in einen anderen Zustand den Kontrast der durch die zweite Anzeigevorrichtung (24) angezeigten Informationen in Abhängigkeit von dem hellen oder dunklen Farbton der ersten Anzeigevorrichtung (22) und von der absorbierenden oder reflektierenden Eigenschaft des hinter der zweiten Anzeigevorrichtung (24) angeordneten Polarisators (44) von einem hellen Aussehen zu einem dunklen Aussehen oder umgekehrt umkehrt.

2. Anzeigeanordnung nach Anspruch 1, **dadurch gekennzeichnet, dass** das Schalten des Ventils (28) von einem Zustand in einen anderen außerdem ermöglicht, entweder nur die erste Anzeige (22) sichtbar zu machen oder sie durch eine Spiegelmaske oder durch eine schwarze Maske vollständig zu verbergen, wenn die Zelle (26) nicht geschaltet wird (OFF).

3. Anzeigeanordnung nach Anspruch 1, **dadurch gekennzeichnet, dass** das Ventil (28) wenigstens zwei verschiedene Zonen mit inverser Schaltung (ON, OFF) besitzt, derart, dass zwei Typen von Informationen der zweiten Anzeige (24) mit einer Kontrastumkehrung beobachtbar sind.

4. Anzeigeanordnung nach Anspruch 1, **dadurch gekennzeichnet, dass** die Flüssigkristalle (27, 29) der Anzeigeanordnung vom nematischen Typ mit Helix gleichgültig ob mit positiver oder negativer Anisotropie sind und in der Zelle (26) und im Ventil (28) gleich oder verschieden sind.

5. Anzeigeanordnung nach Anspruch 4, **dadurch gekennzeichnet, dass** die erste Anzeige (22) einen dunklen Farbton hat, der vordere Polarisator (40) der zweiten Anzeige (24) vom absorbierenden oder reflektierenden Typ ist und der hintere Polarisator (44) vom reflektierten Typ ist und zu dem vorderen Polarisator (40) entweder gekreuzt ist oder zu diesem parallel ist.

6. Anzeigeanordnung nach Anspruch 4, **dadurch gekennzeichnet, dass** die erste Anzeige (22) einen hellen Farbton hat, der vordere Polarisator (40) vom absorbierenden oder reflektierten Typ ist und der hintere Polarisator (44) vom absorbierenden Typ ist und zu dem vorderen Polarisator (40) entweder gekreuzt ist oder zu diesem parallel ist.

7. Anzeigeanordnung nach Anspruch 1, **dadurch gekennzeichnet, dass** die lichtdurchlässigen Substrate (32, 31) gegenüber der Zelle (26) und dem Ventil (28) als ein einziges lichtdurchlässiges Substrat (35) ausgebildet sind.

8. Anzeigeanordnung nach einem der Ansprüche 1 bis 7, **dadurch gekennzeichnet, dass** die erste Anzeigevorrichtung (22) aus einer analogen Vorrichtung, einer digitalen Vorrichtung, einer Kombination aus diesen zwei Vorrichtungen und einem Zierelement gewählt ist.

9. Anzeigeanordnung nach Anspruch 7, **dadurch gekennzeichnet, dass** der digitale Teil der ersten Anzeigevorrichtung (22) eine Struktur hat, die mit jener der zweiten Anzeigevorrichtung (24) vergleichbar ist.

10. Zeitmessgerät, das ein Gehäuse umfasst, das durch ein Uhrenglas (20) und einen Boden (3) verschlossen ist und in das ein Uhrwerk (4) eingesetzt ist, dem wenigstens eine Anzeigevorrichtung zugeordnet ist, die durch eine Anzeigeanordnung (22) nach einem der Ansprüche 1 bis 9 gebildet ist, wobei die erste Anzeigevorrichtung (24) im Wesentlichen die zeitlichen Größen anzeigt und die zweite Anzeigevorrichtung die zu den vorhergehenden komplementären zeitlichen Größen oder nicht zeitliche Größen von Sensorsystemen oder eines beispielsweise alphanumerischen Verarbeitungssystems, die in dem Gehäuse des Zeitmessgeräts enthalten sind, anzeigt.

11. Zeitmessgerät nach Anspruch 10, **dadurch gekennzeichnet, dass** die erste Anzeigevorrichtung (22) eine Welle (18) aufweist, über der sich ein Stundenzeiger (14), ein Minutenzeiger (16) und ein Sekundenzeiger (12) bewegen.

12. Zeitmessgerät nach den Ansprüchen 10 und 11, **dadurch gekennzeichnet, dass** die zweite Anzeigevorrichtung (24) mit dem Uhrenglas (20) zusammenfällt.
